# EUROPEAN PATENT SPECIFICATION

(11) **EP 3 739 248 B1**
(45) Date of publication and mention of the grant of the patent: **01.06.2022**
(21) Application number: 20171595.0
(22) Date of filing: 27.04.2020
(51) Int. Cl.: F16K 11/074, F16K 25/00, G01N 30/20

(54) **NON-STICKING ROTARY VALVE**
NICHTKLEBENDES DREHVENTIL
SOUPAPE ROTATIVE ANTI-ADHÉSIVE

(30) Priority: 14.05.2019 US 201916411937
(43) Date of publication of application: 18.11.2020
(73) Proprietor: Tecan Trading AG, 8708 Männedorf (CH)
(72) Inventor: Kennedy, Michael J., Los Gatos, CA California 95030 (US); Björnson, Torleif, Gilroy, CA California 95020 (US); Bolli, Beat, 8708 Männedorf (CH)
(74) Representative: Qip Patentanwälte Dr. Kuehn & Partner mbB

(56) References cited:
- JP-A- H09 286 916
- US-A- 3 752 167
- US-A- 4 444 066
- US-A- 5 755 261
- US-A1- 2010 101 989
- US-A1- 2010 281 959
- US-A1- 2014 360 605
- US-A1- 2017 284 980
- US-A1- 2018 224 006

## Description

### FIELD OF THE INVENTION

The invention relates to a rotary valve.

### BACKGROUND OF THE INVENTION

Rotary valves may be used in laboratory automation systems for distributing liquids, such as reagents, dilutions, samples, etc.. A rotary valve usually comprises a stator member with stator channels and a rotor member, which faces the stator and which comprises a rotor channel. Dependent on different rotary positions, the rotor channel interconnects different stator channels with each other. A pump may convey a liquid from a first container and/or channel into the rotary valve and the rotary valve may distribute the liquid into other containers and/or channels dependent on its rotor position.

Dependent on the materials used for the stator member and the rotor member, it may be that the stator member and the rotor member stick together, in particular, when specific liquids are present within the valve. Sticking may occur in the interface between the rotor member and stator member as reagents dry during times when the system is idle and the valve is not operating. In general, the exact mechanism is not fully understood. It may be a combination of a glue effect and of solids and/or salt crystals bridging pits in the mating rotor face and stator face, pinning the faces together to prevent rotation. Sticking of highly smooth and flat surfaces may also occur when wetted by certain reagents, which enhance contact and molecular attraction between the surfaces.

It also may be that grooves develop in the faces of the stator member and/or the rotor member. Grooving may be caused by solids present in the reagents, such as glass or magnetic beads, salt crystals from dried regents, etc . It is known that soft polymer materials may be prone to grooving in face-seal valve usage. It is also known that ceramics such as Al2O3 may be resistant to grooving, but subject to sticking in certain applications. The formation of grooves may limit the life time of the valve.

US 4 444 066 A shows a high pressure valve for control of the injection of a sample into an analyzer system. A high nickel and chromium stainless steel alloy is used for the head and an aluminum oxide (ceramic) for the stator member and a graphite-fiber filled polyphenylene sulfide material is used for the rotor member.

US 3 752 167 A shows a rotary valve. The material for the stationary member may be glass ceramic and the material for the rotary member may be any one of fluorocarbon polymers including polytetrafluoroethylene mixed with glass fiber.

US 2010/281959 A1 and US 2010/101989 A1 show a shear valve comprising two shear valve bodies. The first shear valve body may be made of an electrically conductive material and may be coated with DLC. The second shear valve body may comprise a second solid body comprising a polymer material, a metal material or a ceramics material.

US 2014/360605 A1 shows a rotary passage-switching valve. A hard material such as a metallic or ceramic material is used for the stator. The rotor may be made of a resin, such as polyether ether ketone or polyimide.

JP H09286 916 A and US 5 755 261 A1 show a valve assemby with a valve seat made of fluororesins such as ETFE and glassy carbon. A valve body may be made of Al₂0₃. US5755261 discloses a rotary valve according to the preamble of claim 1.

### DESCRIPTION OF THE INVENTION

There may be a need for a rotary valve that is less susceptible to the above mentioned effects. There also may be a need for a rotary valve with a long life time and/or with a rotor member and a stator, which are less prone to sticking and/or groove forming.

These needs may be met by the subject-matter of the independent claim. Further exemplary embodiments are evident from the dependent claims and the following description.

The invention as defined in independent claim 1 relates to a rotary valve comprising a stator member with a planar stator face, the stator member having a plurality of stator channels for conducting a fluid and a rotor member with a planar rotor face facing and in contact with the stator face, the rotor member having at least one rotor channel. The rotor member is rotatable with respect to the stator member, such that in specific rotor positions, the rotor channel interconnects two of the stator channels, such that the stator channels are in fluid communication.

The stator member and the rotor member may be accommodated in a housing of the rotary valve, wherein the stator member may be statically connected with the housing and the rotor member may be rotatably connected with the housing. The rotor member may be rotated by a step motor. A pump, such as an automatically actuated syringe may be connected to one of the stator channels.

The housing of the rotary valve furthermore may comprise means for pressing the rotor face against the stator face, such as a spring, and/or means for aligning the rotor face with the stator face, such as an elastomeric backing disk, which may be attached to a backside of the rotor member and/or may be located between the backside of the rotor member and a step motor coupler.

According to the invention, one of the stator member and the rotor member is made of ceramics material and the other one of the stator member and the rotor member is made of a polymer material, in particular a polymer material mixed with particles. In particular, the stator member may be made of ceramics material and the rotor member may be made of the polymer material or a polymer material mixed with particles.

Experiments have shown that using a polymer material, in particular a polymer material mixed with particles lowers the sticking of the members and the forming of grooves significantly. Thus, the rotary valve may be used with any type of liquids, which tend to form sticking substances, when drying. The rotary valve also may be used with liquids, which may contain particles, which may cause the forming of grooves.

Lowering the sticking may result in a low friction between the rotor member and the stator member during operation and after extended periods of rest. An expensive, complex and/or large sized drive mechanism may be avoided.

Furthermore, the rotary valve may be especially suited for being operated with low liquid pressures, such as pressures up to 10 bar. When low sticking materials are used, for such valves, the force and/or the spring member pressing the rotor member against the stator member may be chosen smaller and/or the drive mechanism may be designed smaller as compared to high pressure valves.

Additionally, with the chosen materials, the life time of the rotary valve may be significantly prolonged. In particular, a valve as described herein may perform millions of valve moves.

The polymer material is or comprises ethylene tetrafluoroethylene (ETFE). The ceramics material may be or may comprise aluminium oxide (AI203). The sticking and forming of grooves was particularly low with these combinations of material.

According to an embodiment of the invention, the ceramics material is coated with diamond-like carbon (DLC). In particular, the ceramics material may be aluminium oxide (AI203) coated with diamond-like carbon. A coating with diamond-like carbon (DLC) may further reduce the forming of grooves. The coating with diamond-like carbon may be made with vapor deposition.

According to an embodiment of the invention, the particles may be and/or may comprise beads. Beads may be particles with substantially the same diameter in any direction. An average diameter of the particles may deviate from a specific diameter in a specific direction not more than by the factor of 2.

According to an embodiment of the invention, the particles may be and/or may comprise fibres. A fibre may have a diameter in one direction, which is at least 10 times higher than a minimal diameter.

According to the invention, the particles are made of carbon. The particles are made of a material, which is harder than the polymer material.

According to the invention, the polymer material is mixed with electrically conducting particles such that the other one of the stator member and the rotor member becomes electrically conducting. For example, the polymer material may be mixed with at least 20% carbon fibres to render the mixture of polymer material and carbon fibres electrically conducting.

It may be that a static charge builds up on the rotor member and the stator member, when they are rotated with respect to each other. A molecular scission process may create chelates of the material of the polymer material, such as ETFE, which may adhere to charged surfaces of the rotor member and the stator member. For example, the chelates may form a molecular bond to the surface of the ceramics material and may damage the polymer material against which they are moved during rotation of the rotor member and the stator member. Reducing the static charge may help that the chelates are washed away during valve operation Otherwise, the static charge may attract charged chelates that may adhere to rotor and stator surfaces. Removing the static charge may enable reagents without molecular charge (such as DI water) to wash away chelates (for example made of ETFE during valve operation. The static charge may be removed by making the member made of polymer material electrically conducting. The forming of chelates of polymer material may be reduced by coating the ceramics material with DLC.

According to an embodiment of the invention, the particles may have a diameter of less than 50 µm. It may be that an average diameter of beads is less than 50 µm and/or that a minimal diameter of fibres is less than 50 µm. The diameter may be between 10 µm and 50 µm, in particular between 15 µm and 45 µm. The diameter may be about 30 µm.

According to an embodiment of the invention, the particles may have a volume content between 10% and 30% with respect to the polymer material. For example, the rotor member and the stator member, respectively, may be made from 70% to 90% from the polymer material and from 10% to 30% from the particles. The volume content of the particles may be between 15% and 25%, for example about 20%.

It may be that the face of the respective member made of the polymer material mixed with particles, i.e. the rotor face and/or the stator face is lapped, for example after machining or moulding. It also may be that the rotor face and/or stator face is diamond-turned after machining or moulding. In both cases, a flat and smooth surface may be generated.

According to an embodiment of the invention, the one of the stator member and the rotor member may be made one-piece from the ceramics material. Also, the other one of the stator member and the rotor member may be made one-piece of the polymer material mixed with the particles. Both or one of the two members may be made one-piece of the respective material. The term "one-piece" in this context may mean that the respective member is not put together from pieces that are glued or somehow attached together. The material of the respective member may be homogeneous.

According to an embodiment of the invention, the rotor channel may be a groove in the rotor face. The rotor face may be a substantially planar surface in which the rotor channel is provided. The rotor channel may be a longitudinal groove in this surface, which may extend in a direction orthogonal to an axis of rotation of the rotor member.

According to an embodiment of the invention, the stator channels are axially extending with respect to an axis of rotation of the rotor member. The stator face may be a substantially planar surface, in which the stator channels are provided. The stator channels may have openings in the stator face.

According to an embodiment of the invention, edges of a channel in one of the stator member and the rotor member may be rounded with a radius between 15 µm and 35 µm, such as about 25 µm. The radius may be a minimum radius of the edge. The edge may be at a transition between the stator face and a stator channel and/or between the rotor face and the rotor channel.

In particular, the edges in the member made of ceramics material, such as the stator member, may be rounded. For example, the face of the ceramics member may be finished with a lapping process to achieve a flat surface with soft edges at the interface to the member made of polymer material mixed with particles. This lapping process may create a uniformly smooth surface to enable effective and reliable valve sealing performance. For example, the lapping process may prevent sharp edges on a ceramics stator member from wearing or damaging a moulded ETFE rotor member during valve operation.

According to the invention, the rotor member is part of a rotor assembly, which may comprise a coupling element connectable to an electrical motor. The rotor member, which may be made of the polymer material mixed with particles, may be attached to the coupling element, which may be attached to the electrical motor, such as a step motor. A flat on the motor driveshaft may be provided to index the rotor channel position to a plurality of channel positions in the stator. The coupling element may be made of different materials, such as metal or a hard polymer such as PEEK. The rotor assembly may be rotatably mounted to the housing of the rotary valve, for example via a bearing.

It may be that the rotor member is made of a polymer material, which is mixed with electrically conducting particles, such that the rotor member becomes electrically conducting. In this case, the rotor member may be grounded to the grounded to the motor drive shaft. This may reduce a generation of static charge in the rotor member. Grounding of the rotor member may be done with a coupling element made of an electrically conducting material, such as a metal, for example stainless steel.

According to the invention, a balancing member is arranged between the coupling element and the rotor member. The rotor member is not directly attached to the coupling element, but a balancing member is provided between, which is adapted to balance unevenness between the mating surfaces of the coupling element and the rotor member, thus ensuring uniform contact pressure. The balancing member may be a flat member and/or may be shaped like a disk. The balancing member may be attached to a backside of the rotor member, which is opposite to the rotor face.

According to the invention, the balancing member is made of a material having a higher elasticity than the polymer material of the stator member. In such a way, the balancing member may balance misalignments and unevenness and may press the rotor member against the stator member.

According to the invention, the balancing member is made of an elastomer material, such as rubber. For example, the balancing member may be made of ethylene propylene diene methylene (EPDM). A balancing member in the form of an elastomer disk may ensure a complete contact between polymer face and ceramics face.

According to an embodiment of the invention, the rotary valve may further comprise a housing part, in which the rotor assembly is rotatably mounted, and a preload spring arranged in the housing part between the coupling element and a shoulder of the housing for pressing the rotor member against the stator member. The housing part may be a valve body, which comprises a cavity in which the rotor assembly is accommodated.

According to an embodiment of the invention, the housing part and/or valve body may have slots for attaching and/or replacing mounting screws on a fully assembled valve by means of a snap-fit connection.

The rotary valve furthermore may comprise a bearing element arranged between the spring and the coupling element.

The preload spring, which may be a steel spring, and the balancing member may be seen as a preload system of the rotary valve. The spring may provide a force required to seal the rotor member against the stator member.

A flexing of the rotor member may cause a leak in the rotary valve. The balancing member may compensate for this effect by preventing the rotor member from flexing under the force of the preload spring and/or may encourage the rotor member with its rotor face to fully and uniformly seat against the stator face.

The coupling element may comprise a recess, which may keep the balancing member centered on an axis of rotation. This may enable a proper alignment of the preload force of the spring on the rotor member.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows an exploded view of a rotary valve according to an embodiment of the invention.
Fig. 2 shows a perspective sectional view of the rotary valve of Fig. 1.
Fig. 3 schematically shows a stator face for a rotary valve according to an embodiment of the invention.
Fig. 4 schematically shows a rotor face for a rotary valve according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

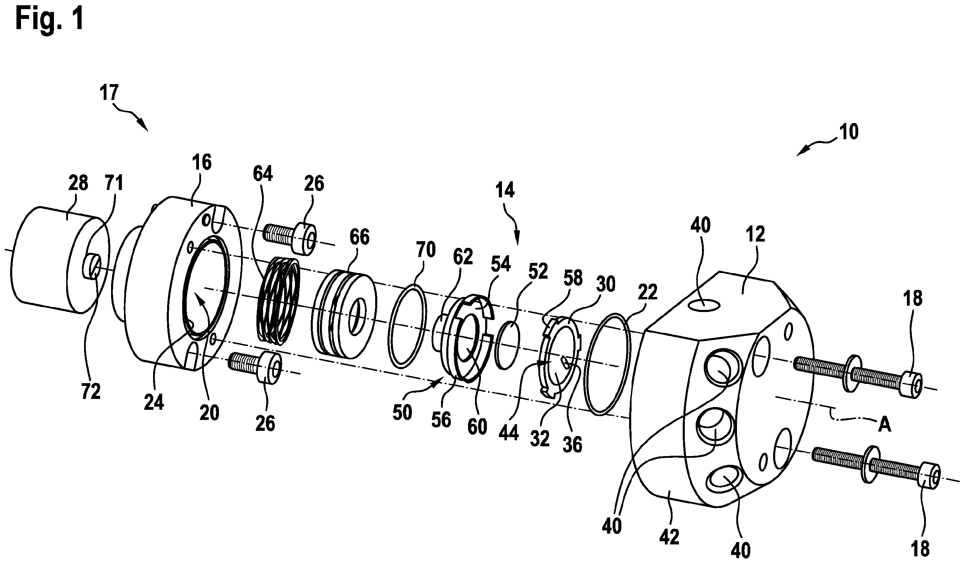

Fig. 1 shows a rotary valve 10, which comprises a stator member 12 and a rotor assembly 14, which is accommodated in a valve body 16. An outer part of the stator member 12 and the valve body 16 may be seen as a housing 17 of the rotary valve 10. The stator member 12 is mounted to the valve body 16, for example with screws 18. Between the stator member 12 and the valve body 16, a cavity 20 is formed, which accommodates the rotor assembly 14.

Between mating surfaces of the stator member 12 and the valve body 16, an O-ring 22 made of an elastomeric material is provided in a recess 24 in the valve body 16, which tightens a seal between the stator member 12 and the valve body 16.

Further screws 26 may be attached by means of a snap-fit connection to the valve body and used to attach the valve body 16 to further components of the rotary valve 10, such as a step motor 28.

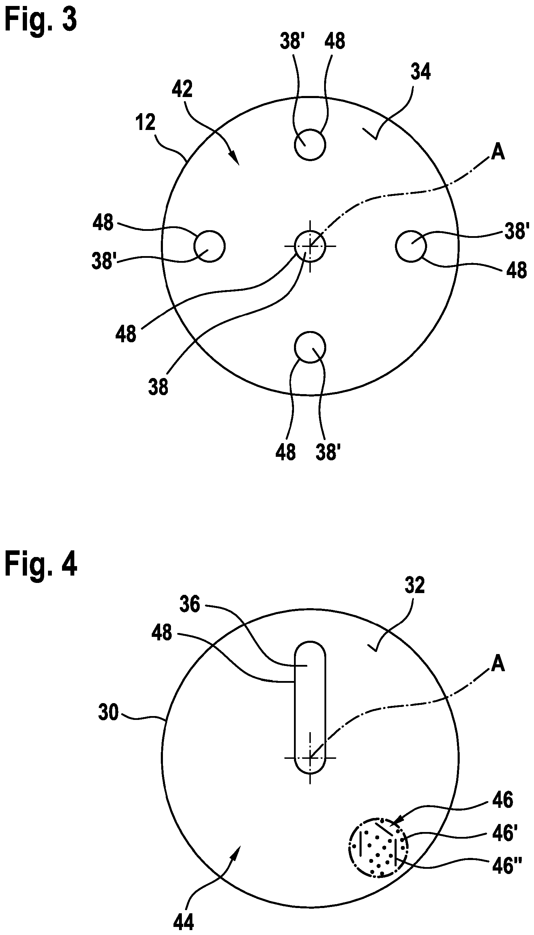

The rotor assembly 14 comprises a rotor member 30, which is pressed against the stator member 12. In particular, the rotor member 30 has a planar rotor face 32 and the stator member 12 has a planar stator face 34, which touch each other to form a liquid tight seal. A view on the stator face 34 is shown in Fig. 3 and a view on the rotor face is shown on Fig. 4. Both the stator face 34 and the rotor face 32 may be circular areas and/or may be provided by disc-shaped parts of the rotor member 30 and the stator member 12, respectively.

In the rotor member 30, a rotor channel 36 in the form of a groove is provided. In specific rotational positions of the rotor member 30 with respect to the stator member 12, the rotor channel interconnects two stator channels 38, 38'. As shown in Fig. 3, for the present valve 10, four different positions are possible for connecting the central stator channel 38 with one of the other stator channels 38'. All of the stator channels 38, 38' have a port or channel opening into the stator face 34, which is aligned substantially parallel to a rotation axis A of the rotor assembly 14. The rotor channel 36 is aligned substantially orthogonal to the rotation axis A.

In the stator member 12, receptacles and/or openings 40 interconnected with the stator channels 38, 38' are provided, which may be used for connecting hoses and/or fluidic tubing which transport the liquid to and from the rotary valve 10.

It has to be noted that other forms of rotor channels, such as a rotor channel interconnecting three stator channels, and/or other numbers and/or arrangements of rotor channels and/or stator channels are possible.

One of the stator member 12 and the rotor member 30 is made of ceramics material 42. The other one of the stator member 12 and the rotor member 30 is made of a polymer material 44 mixed with particles 46. In the following, it will be assumed that the stator member 12 is made of ceramics material and that the rotor member 30 is made of the polymer material mixed with particles 46. However, it is also possible in the following that the choice of material is the other way around. The ceramics material 42 may be coated with DLC.

The polymer material 44 is or comprises ethylene tetrafluoroethylene (ETFE). The ceramics material 42 may be and/or may comprise aluminium oxide (AI203), optionally coated with DLC.

The particles 46 may be and/or may comprise beads 46' and/or fibres 46". The particles 46 are made of carbon. The particles 46 may have a diameter of less than 50 µm, such as about 30 µm, and/or may have a volume content between 10% and 30%, such as about 20%, with respect to the polymer material 44.

The particles 46 are electrically conducting carbon particles or carbon fibers. The polymer material 44 mixed with particles is electrically conducting.

In such a way, the forming of an electric charge may be prevented.

It has to be noted that stator member 12 may be made one-piece from the ceramics material 42 and/or that the rotor member 30 may be made one-piece of the polymer material 44 mixed with the particles 46.

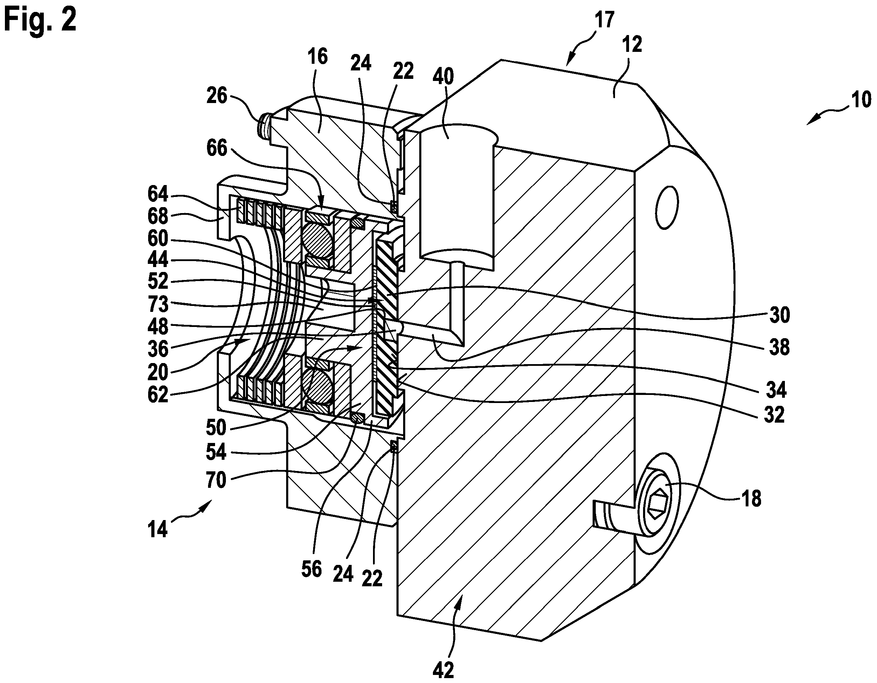

The stator member 12 may be made in the following way. A stator member preform may be cast from the ceramics material 42 in substantially the outer form as shown in Fig. 1 and 2. The channels 38, 38', openings 40, etc. may be machined into the preform. After that at least the surface facing towards the rotor member 30, i.e. the stator face 34, may be coated with DLC, for example with vapor deposition.

The stator face 34, i.e. the surface of the stator mating the rotor face 32, may be finished with a lapping process to achieve a flat surface with soft edges 48. This lapping process may create a uniformly smooth surface to enable effective and reliable valve sealing performance. The lapping process may prevent sharp edges 48 on the ceramics stator member 12 from wearing or damaging the polymer rotor member 30.

With the lapping process, the edges 48 of the stator channels 38, 38' may be rounded with a minimum radius between 15 µm and 35 µm, such as about 20 µm.

The rotor member 30 may be made in the following way. The rotor member may be machined and/or injection moulded from an ETFE polymer formulation with 20% carbon beads and/or carbon fibres. Lapping of the rotor face 32 after machining and/or moulding may be performed. Alternatively or additionally, diamond-turning may be used to achieve a flat and smooth rotor face 32.

As shown in Fig. 1 and 2, the rotor assembly 14 furthermore comprises a coupling element 50, which accommodates the rotor member 30 and a disc-shaped balancing member 52 arranged between the rotor member 30 and the coupling element 50. The coupling element 50 may comprise a disc-shaped part 54 with an interrupted border 56, which forms an opening, in which the rotor member 30 is provided. The rotor member 30 may have fingers 58 engaging into the interrupted border 56, such that a rotational movement of the rotor member 30 and rotor channel 36 position may be transferred and/or indexed from the coupling element 50 to the rotor member 30. Furthermore, the position of the rotor channel, which may be indexed to a plurality of stator channel positions, may be aligned with the step motor driveshaft 71 by means of a driveshaft flat 72 and a coupler flat 73.

The balancing member 52 is arranged in a recess 60 in the coupling element 50 and in particular in the disc-shaped part 54. The balancing member 52 is made of an elastomeric material, such as rubber. The balancing member 52 may be disc-shaped and/or may have a diameter equal to or smaller than a diameter of the rotor face 32.

The coupling element 50 furthermore has a shaft 62 adapted to engage an axis of the motor 28. The coupling element 50 may have a shaft recess for receiving the axis of the motor 28 with a coupler flat 73, which may index the rotor channel position to a plurality of stator channel positions.

The coupling element 50 may be made of an electrically conducting material, such as stainless steel. With a coupling element 50 made of an electrically conducting material, the rotor member 30 may be grounded and a forming of static charge may be reduced.

The rotary valve 10 furthermore comprises a preload spring 64 and a thrust bearing 66 arranged in the cavity 20 of the valve body 16. The spring 64 is supported by a shoulder 68 of the valve body 16 and presses the bearing 66 against the coupling element 50, which presses the rotor member 30 against the stator member 12. The force from the coupling element 50 is transferred via the balancing member 52. An O-ring seal 70 may be provided between the bearing 66 and the coupling element 50. The O-ring seal 70 may be made of elastomeric material. Seal 70 may serve two purposes: prevent any errant fluid from reaching the metal parts in the valve or drive mechanism and/or physically center and align the rotor with the centreline of the valve assembly. This centering may also be accomplished in other ways such as with bearings, sleeve arrangements or by extending the rotor member fingers to guide against the walls of the valve body.

The spring 64 and the balancing member 52 may be seen as a rotor preload system of the rotary valve. 10. The preload spring 64 may provide the force required to seal the rotor face 32 against the stator face 34. Without the balancing member 52, a flexing of the rotor member 30 made of polymer 44, for example due to an unevenly distributed preload force, assembly misalignment and/or rotor member 30 thickness tolerance variation, may cause a leak. The balancing member 52 may compensate for these effects by preventing the rotor member 30 from flexing under the force of the preload spring 64 and may encourage the rotor face 32 to fully seat against the stator face 34. The recess 60 in the coupling element 50 may keep the balancing member 52 centered on the rotation axis A. This may enable a proper alignment of the preload force on the rotor member 30.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: rotary valve
- 12: stator member
- 14: rotor assembly
- 16: valve body
- 17: housing
- 18: screw
- 20: cavity
- 22: O-ring
- 24: recess
- 26: screw
- 28: motor
- 30: rotor member
- 32: rotor face
- 34: stator face
- 36: rotor channel
- 38: central stator channel
- 38': non-central stator channel
- A: rotation axis
- 40: opening
- 42: ceramics material
- 44: polymer material
- 46: particles
- 46': beads
- 46": fibres
- 48: edge
- 50: coupling element
- 52: balancing member
- 54: disc-shaped part
- 56: border
- 58: finger
- 60: recess
- 62: shaft
- 64: spring
- 66: bearing
- 68: shoulder
- 70: O-ring seal
- 71: motor driveshaft
- 72: driveshaft flat
- 73: coupler flat

## Claims

1. A rotary valve (10), comprising:
a stator member (12) with a planar stator face (34), the stator member (12) having a plurality of stator channels (38, 38') for conducting a fluid;
a rotor member (30) with a planar rotor face (32) facing and in contact with the stator face (34), the rotor member (30) having at least one rotor channel (36);
wherein the rotor member (30) is rotatable with respect to the stator member (12), such that in specific rotor positions, the rotor channel (36) interconnects two of the stator channels (38, 38'), such that the stator channels (38, 38') are in fluid communication;
wherein one of the stator member_(12) and the rotor member (30) is made of ceramics material (42);
wherein the other one of the stator member (12) and the rotor member (30) is made of a polymer material (44) comprising ethylene tetrafluoroethylene (ETFE);
wherein the polymer material (44) is mixed with electrically conducting particles (46), such that the other one of the stator member (12) and the rotor member (30) becomes electrically conducting;
wherein the electrically conducting particles (46) comprise carbon particles and/or carbon fibers;
**characterised in that**
the rotor member (30) is part of a rotor assembly (14), which comprises a coupling element (50) connectable to an electrical motor (28);
wherein a balancing member (52) is arranged between the coupling element (50) and the rotor member (30);
wherein the balancing member (52) is made of a polymer material having a higher elasticity than the polymer material (44) of the stator member;
wherein the balancing member (52) is made of an elastomer material.

2. The rotary valve of claim 1,
wherein the ceramics material (42) comprises aluminium oxide (AI203).

3. The rotary valve of one of the previous claims,
wherein the ceramics material (42) is coated with diamond-like carbon.

4. The rotary valve of one of the previous claims,
wherein the particles have a volume content between 10% and 30% with respect to the polymer material.

5. The rotary valve of one of the previous claims,
wherein the rotor channel (36) is a groove in the rotor face (32).

6. The rotary valve of one of the previous claims,
wherein the stator channels (38, 38') are axially extending with respect to an axis (A) of rotation of the rotor member (30).

7. The rotary valve of one of the previous claims,
wherein edges (48) of a channel (38, 38') in one of the stator member (12) and the rotor member (30) are rounded with a radius between 15 µm and 35 µm.

8. The rotary valve of one of the previous claims,
wherein the balancing member (52) is made of ethylene propylene diene methylene (EPDM).

9. The rotary valve of one of the previous claims, further comprising:
a housing part (17), in which the rotor assembly (14) is rotatably mounted;
a spring (64) arranged in the housing part (17) between the coupling element (50) and a shoulder (68) of the housing part (17) for pressing the rotor member (30) against the stator member (12); and
a bearing element (66) arranged between the spring (64) and the coupling element (50).

## Patentansprüche

1. Drehventil (10), umfassend:
ein Statorelement (12) mit einer planaren Statorfläche (34), wobei das Statorelement (12) mehrere Statorkanäle (38, 38') zum Leiten eines Fluids aufweist;
ein Rotorelement (30) mit einer planaren Rotorfläche (32), die der Statorfläche (34) zugewandt ist und mit ihr in Kontakt steht, wobei das Rotorelement (30) mindestens einen Rotorkanal (36) aufweist;
wobei das Rotorelement (30) in Bezug auf das Statorelement (12) so drehbar ist, dass in bestimmten Rotorpositionen der Rotorkanal (36) zwei der Statorkanäle (38, 38') so miteinander verbindet, dass die Statorkanäle (38, 38') in Strömungsverbindung stehen;
wobei eines des Statorelements (12) und des Rotorelements (30) aus einem keramischen Material (42) hergestellt ist;
wobei das andere des Statorelements (12) und des Rotorelements (30) aus einem Polymermaterial (44) hergestellt ist, das Ethylentetrafluorethylen (ETFE) umfasst;
wobei das Polymermaterial (44) mit elektrisch leitenden Partikeln (46) so vermischt ist, dass das andere des Statorelements (12) und des Rotorelements (30) elektrisch leitend wird;
wobei die elektrisch leitenden Partikel (46) Kohlenstoffpartikel und/oder Karbonfasern umfassen;
**dadurch gekennzeichnet, dass**
das Rotorelement (30) Teil einer Rotoranordnung (14) ist, die ein Kopplungselement (50) umfasst, das mit einem Elektromotor (28) verbunden werden kann;
wobei ein Ausgleichselement (52) zwischen dem Kopplungselement (50) und dem Rotorelement (30) angeordnet ist;
wobei das Ausgleichselement (52) aus einem Polymermaterial hergestellt ist, das eine höhere Elastizität als das Polymermaterial (44) des Statorelements aufweist;
wobei das Ausgleichselement (52) aus einem Elastomermaterial hergestellt ist.

2. Drehventil nach Anspruch 1,
wobei das keramische Material (42) Aluminiumoxid (Al₂O₃) umfasst.

3. Drehventil nach einem der vorangehenden Ansprüche,
wobei das keramische Material (42) mit diamantartigem Kohlenstoff beschichtet ist.

4. Drehventil nach einem der vorangehenden Ansprüche,
wobei die Partikel einen Volumengehalt zwischen 10 % und 30 %, bezogen auf das Polymermaterial, aufweisen.

5. Drehventil nach einem der vorangehenden Ansprüche,
wobei der Rotorkanal (36) eine Nut in der Rotorfläche (32) ist.

6. Drehventil nach einem der vorangehenden Ansprüche,
wobei sich die Statorkanäle (38, 38') axial in Bezug auf eine Drehachse (A) des Rotorelements (30) erstrecken.

7. Drehventil nach einem der vorangehenden Ansprüche,
wobei Ränder (48) eines Kanals (38, 38') in einem des Statorelements (12) und des Rotorelements (30) mit einem Radius zwischen 15 µm und 35 µm gerundet sind.

8. Drehventil nach einem der vorangehenden Ansprüche,
wobei das Ausgleichselement (52) aus Ethylen-Propylen-Dien-Methylen (EPDM) hergestellt ist.

9. Drehventil nach einem der vorangehenden Ansprüche, des Weiteren umfassend:
einen Gehäuseteil (17), in dem die Rotoranordnung (14) drehbar montiert ist;
eine Feder (64), die in dem Gehäuseteil (17) zwischen dem Kopplungselement (50) und einer Schulter (68) des Gehäuseteils (17) angeordnet ist, um das Rotorelement (30) gegen das Statorelement (12) zu drücken; und
ein Lagerelement (66), das zwischen der Feder (64) und dem Kopplungselement (50) angeordnet ist.

## Revendications

1. Vanne rotative (10) comprenant :
un élément de stator (12) doté d'une face plane de stator (34), l'élément de stator (12) comportant une pluralité de canaux de stator (38, 38') destinés à conduire un fluide ;
un élément de rotor (30) doté d'une face plane de rotor (32) en regard et au contact de la face de stator (34), l'élément de rotor (30) comportant au moins un canal de rotor (36) ;
dans laquelle l'élément de rotor (30) peut tourner par rapport à l'élément de stator (12), de manière que dans des positions spécifiques du rotor, le canal de rotor (36) relie entre eux deux des canaux de stator (38, 38'), de telle sorte que les canaux de stator (38, 38') soient en communication fluidique ;
dans laquelle l'un de l'élément de stator (12) ou de l'élément de rotor (30) est constitué d'un matériau céramique (42) ;
dans laquelle l'autre de l'élément de stator (12) ou de l'élément de rotor (30) est constitué d'un matériau polymère (44) comprenant l'éthylène-tétrafluoroéthylène (ETFE) ;
dans laquelle le matériau polymère (44) est mélangé avec des particules électriquement conductrices (46), de telle sorte que l'autre de l'élément de stator (12) ou de l'élément de rotor (30) devienne électriquement conducteur ;
dans laquelle les particules électriquement conductrices (46) comprennent des particules de carbone et/ou des fibres de carbone ;
**caractérisée en ce que** :
l'élément de rotor (30) fait partie d'un ensemble rotor (14) qui comprend un élément d'accouplement (50) pouvant être raccordé à un moteur électrique (28) ;
dans laquelle un élément d'équilibrage (52) est disposé entre l'élément d'accouplement (50) et l'élément de rotor (30) ;
dans laquelle l'élément d'équilibrage (52) est constitué d'un matériau polymère possédant une élasticité supérieure à celle du matériau polymère (44) de l'élément de stator ;
dans laquelle l'élément d'équilibrage (52) est constitué d'un matériau élastomère.

2. Vanne rotative selon la revendication 1,
dans laquelle le matériau céramique (42) comprend l'oxyde d'aluminium (Al₂O₃).

3. Vanne rotative selon l'une des revendications précédentes,
dans laquelle le matériau céramique (42) est revêtu de carbone adamantin.

4. Vanne rotative selon l'une des revendications précédentes,
dans laquelle la teneur volumique en particules par rapport au matériau polymère est comprise entre 10 % et 30 %.

5. Vanne rotative selon l'une des revendications précédentes,
dans laquelle le canal de rotor (36) est une rainure sur la face de rotor (32).

6. Vanne rotative selon l'une des revendications précédentes,
dans laquelle les canaux de stator (38, 38') s'étendent axialement par rapport à un axe (A) de rotation de l'élément de rotor (30).

7. Vanne rotative selon l'une des revendications précédentes,
dans laquelle les bords (48) d'un canal (38, 38') de l'un de l'élément de stator (12) ou de l'élément de rotor (30) sont arrondis selon un rayon compris entre 15 µm et 35 µm.

8. Vanne rotative selon l'une des revendications précédentes,
dans laquelle l'élément d'équilibrage (52) est constitué d'éthylène-propylène-diène-méthylène (EPDM).

9. Vanne rotative selon l'une des revendications précédentes, comprenant en outre :
une partie boîtier (17) dans laquelle l'ensemble rotor (14) est monté rotatif ;
un ressort (64) disposé dans la partie boîtier (17) entre l'élément d'accouplement (50) et un épaulement (68) de la partie boîtier (17) pour presser l'élément de rotor (30) contre l'élément de stator (12) ; et
un élément formant palier (66) disposé entre le ressort (64) et l'élément d'accouplement (50).
